# EUROPÄISCHE PATENTSCHRIFT

(11) **EP 2 042 398 B1**
(45) Veröffentlichungstag und Bekanntmachung des Hinweises auf die Patenterteilung: **22.12.2010**
(21) Anmeldenummer: 08014046.0
(22) Anmeldetag: 06.08.2008
(51) Int. Cl.: B60W 30/12

(54) **Verfahren zum Betrieb wenigstens eines auf eine Querführung eines Kraftfahrzeugs bezogenen Fahrerassistenzsystems sowie zugehöriges Kraftfahrzeug**
Method of operating at least one driver assistance system for transverse guidance of a motor vehicle and corresponding motor vehicle
Procédé de fonctionnement d'au moins un système d'assistance au conducteur lié à une traverse de véhicule et véhicule correspondant

(30) Priorität: 28.09.2007 DE 102007046688
(43) Veröffentlichungstag der Anmeldung: 01.04.2009
(73) Patentinhaber: Audi AG, 85045 Ingolstadt (DE)
(72) Erfinder: Freyer, Jörn, 81827 München (DE)
(74) Vertreter: Thielmann, Frank

(56) Entgegenhaltungen:
- EP-A- 1 531 113
- EP-A- 1 607 264
- EP-A- 1 777 143
- DE-A1-102005 058 130
- DE-C1- 4 313 568
- US-A- 6 133 825

## Beschreibung

Die Erfindung betrifft ein Verfahren zum Betrieb eines auf das Einhalten einer aktuellen Fahrspur eines Kraftfahrzeugs bezogenen Fahrerassistenzsystems sowie ein zugehöriges Kraftfahrzeug.

Querführungssysteme als Fahrerassistenzsysteme in Kraftfahrzeugen dienen dazu, den Fahrer beim Halten seiner Fahrspur bzw. beim Wechsel in eine andere Fahrspur zu unterstützen. Dies bedeutet, dass beispielsweise Warnungen ausgegeben werden, wenn ein unbeabsichtigtes Verlassen einer aktuellen Fahrspur droht bzw. wenn bei einem beabsichtigten Spurwechsel ein Fahrzeug auf der neuen Fahrspur, beispielsweise im toten Winkel, übersehen wurde. Dabei erfolgt die Ausgabe von Warnungen oftmals nach einem recht starren Prinzip.

Ein Problem bei Fahrerassistenzsystemen im Allgemeinen ist die Frage der Akzeptanz durch die Fahrer der mit ihnen ausgerüsteten Kraftfahrzeuge. Werden beispielsweise bei gewollten Manövern unnötige Warnungen erzeugt bzw. fehlen Warnungen in manchen kritischen Situationen, so kann dies dazu führen, dass der Fahrer das Gefühl hat, dass er sich nicht auf die Warnungen des Fahrerassistenzsystems verlassen kann und diese gegebenenfalls ignoriert oder sogar das Fahrerassistenzsystem deaktiviert. Damit ist die mit dem Fahrerassistenzsystem intendierte effektive Unterstützung des Fahrers in Frage gestellt.

EP 1 777 143 A1 betrifft einen Autobahnassistenten zum semiautonomen Fahren für ein Kraftfahrzeug mit einem Spurwechselassistenten. Wenn ein Überholvorgang aufgrund eines langsamer vorausfahrenden Fahrzeugs notwendig ist, um eine bestimmte Wunschgeschwindigkeit aufrecht erhalten zu können, gibt dieser Autobahnassistent automatisch ein Lenkmoment vor. Alternativ wird ein Lenkmoment ebenfalls vorgegeben, wenn sich das Kraftfahrzeug auf einer Überholspur befindet und auf der oder den rechten Fahrspuren keine weiteren Fahrzeuge mehr sind.

EP 1 607 264 A1 betrifft einen Spurwechselassistenten, der in die Steuerung eines Kraftfahrzeugs eingreift. Dabei wird mittels einer Entscheidungseinrichtung entschieden, ob ein Spurwechselwunsch des Fahrers anzunehmen ist, und im Falle eines Spurwechselwunsches wird ein Beschleunigungsbefehl an das Geschwindigkeitsregelsystem ausgegeben, wobei die Beschleunigungsstrategie auf ein gefahrloses Einscheren auf die Nebenspur abgestimmt ist.

Eine Blind-Spot-Warneinrichtung wird in der US 6,133,825 offenbart. Diese warnt bei einem beabsichtigten Spurwechsel vor Fahrzeugen im toten Winkel. Zur Ausgabe einer Warnung ist das Vorhandensein eines Kraftfahrzeugs auf einer zum Kraftfahrzeug benachbarten Fahrspur zwingend erforderlich. Die Ausgabe einer Warnung des Blind-Spot-Fahrerassistenzsystems wird unterdrückt, wenn sich das Kraftfahrzeug in einem Stau befindet.

DE 10 2005 058 130 A1 betrifft ein Warnsystem für ein Kraftfahrzeug, das ein auf das Einhalten der aktuellen Fahrspur bezogenes Fahrerassistenzsystem besitzt. Dabei sollen die Warneigenschaften des Fahrerassistenzsystems dahingehend verbessert werden, dass unnötige oder störende Warnungen vermieden werden, weshalb die an den Fahrer abgegebene Warnung in der Art und/oder der Intensität an die Relativlage des Kraftfahrzeugs zu einer Fahrbahnbegrenzung angepasst wird.

Der Erfindung liegt die Aufgabe zu Grunde, ein Verfahren zum Betrieb eines auf das Einhalten der aktuellen Fahrspur eines Kraftfahrzeugs bezogenen Fahrerassistenzsystems anzugeben, das diesbezüglich verbessert ist.

Zur Lösung dieser Aufgabe ist erfindungsgemäß ein Verfahren dieser Art vorgesehen, bei dem wenigstens eine seitens des Fahrerassistenzsystems vorgesehene Warnung eines Fahrers des Kraftfahrzeugs in Abhängigkeit wenigstens einer mittels des Fahrerassistenzsystems erkannten und auf wenigstens ein Fahrzeug auf einer benachbarten Fahrspur und/oder den Zustand der eigenen Fahrspur bezogenen und eine Querführungsaktion indizierenden Fahrsituation verändert, insbesondere zeitlich und/oder in der Stärke verändert, und/oder unterdrückt und/oder erzeugt wird.

Beim erfindungsgemäßen Verfahren werden somit Verkehrssituationen bzw. Fahrsituationen differenziert im Hinblick auf eine passende Warnerzeugung bzw. gegebenenfalls Unterdrückung einer Warnung betrachtet und/oder ausgewertet. Das Fahrerassistenzsystem verändert also gegebenenfalls seine Warnung bzw. adaptiert diese in Abhängigkeit von einer aktuellen Verkehrssituation bzw. erzeugt diese spezifisch oder unterdrückt sie.

Dabei gibt es unterschiedliche Fahrsituationen, die erfindungsgemäß analysiert werden. Zum einen können Fahrsituationen betrachtet werden, die auf Fahrzeuge auf benachbarten Fahrspuren bezogen sind, ergänzend oder alternativ ebenso Fahrsituationen, bei denen der Zustand der eigenen Fahrspur im Mittelpunkt steht. Diese Fahrsituationen sind dadurch gekennzeichnet, dass sie Querführungsaktion indizieren, dass also diese Fahrsituationen Auslöser für ein bestimmtes Querführungsverhalten bzw. Grundlage für eine auf die Querführung bezogene Maßnahme sein können und/oder diese ratsam erscheinen lassen.

Es wird also beim erfindungsgemäßen Betriebsverfahren für das Querführungssystem als Grundlage für eine spezifische Querführungsaktion nicht nur z. B. der Fall eines Überholvorgangs auf der eigenen Spur betrachtet, sondern es werden unterschiedlichste Verkehrssituationen, die zu einem spezifisch auf die Querführung bezogenen Fahrverhalten des Fahrers führen können, seitens des Fahrerassistenzsystems, beispielsweise über eine entsprechende Steuerungs- und/oder Recheneinrichtung, gegebenenfalls im Zusammenspiel mit entsprechenden Sensoren zur Aufnahme von auf die Fahrsituation bezogenen Daten, erkannt.

Auf Grund dieser umfassenden Analyse von Fahrsituationen werden Warnungen nicht mehr undifferenziert erzeugt, sondern erfolgen angepasst an die spezifische Verkehrssituation und damit gegebenenfalls auch gar nicht. Dadurch entspricht die Warngabe in einem deutlich höheren Maß einem "vernünftigen" Warnverhalten, wie es ein Fahrer erwartet, so dass dementsprechend die Akzeptanz des Fahrerassistenzsystems und damit auch die Wertschätzung der von diesem gegebenen Warnungen erhöht wird.

Die erfindungsgemäß (als Auslöser für ein bestimmtes Querführungsverhalten) erkannten Situationen betreffen dabei Fahrzeuge auf benachbarten Spuren (die sonst nur ergänzend bei durch Fahrzeuge auf der eigenen Spur indizierten Maßnahmen berücksichtigt wurden) bzw. den Zustand der eigenen Spur (im Unterschied zum Verkehr auf der eigenen Spur). Selbstverständlich können bzw. sollten ergänzend auch weitere querführungsspezifischen Situationen (wie der erwähnte gewünschte Überholvorgang) berücksichtigt werden.

Erfindungsgemäß kann bei einem auf die Querführung eines Kraftfahrzeugs im Sinne eines Einhaltens einer Fahrspur bezogenen Fahrerassistenzsystem wenigstens eine Warnung unterdrückt und/oder bei einem auf die Querführung des Kraftfahrzeugs im Sinne einer Unterstützung eines Fahrspurwechsels bezogenen Fahrerassistenzsystem eine Warnung erzeugt werden und/oder eine Warnung in Abhängigkeit von einer erkannten Kritikalität verändert werden.

Beispielsweise kann eine Warnung, die normalerweise erfolgen würde, wenn bei einem System, das auf die Einhaltung einer aktuellen Fahrspur gerichtet ist, erkannt wird, dass der Fahrer im Begriff ist, diese zu verlassen, eine Warnung unterdrückt werden, wenn sich aus der Fahrsituation ergibt, dass das drohende Verlassen der Fahrspur unter Umständen beabsichtigt ist, diese also das aktuelle Fahrerverhalten indizieren könnte. Analog können bei Fahrerassistenzsystemen, die einen Fahrspurwechsel unterstützen sollen, auch dann Warnungen erzeugt werden, wenn lediglich ein potentieller Spurwechsel erkannt wurde, also eine Fahrsituation darauf hinweist, dass ein Spurwechsel zu erwarten sein könnte, ohne dass dieser durch den Fahrer eindeutig angekündigt wurde, insbesondere, ohne dass der Fahrer einen Blinker gesetzt hat. Es wird also auch dann eine Warnung gegeben, wenn der Spurwechsel lediglich wahrscheinlich und nicht sicher ist. Ist dies allerdings nicht der Fall, so wird vorzugsweise auch keine Latentwarnung ausgegeben, die Latentwarnstufe kann erfindungsgemäß also angehoben werden.

Ebenso kann eine Warnung in Abhängigkeit von einer (zusätzlich zur Fahrsituation bzw. für diese) erkannten Kritikalität verändert werden. Beispielsweise kann eine Warnung später erfolgen, wenn neben der eigenen Fahrspur (Ego-Spur) in die Richtung des Verlassens der Spur noch eine weitere Spur ohne Fahrzeuge vorhanden ist. Ist hingegen ein Objekt vorhanden, wobei sich dieses Objekt in der Verlassensrichtung befindet, so sollte die Warnung früher erfolgen. Ebenso kann in anderen hier nicht erwähnten Situationen die Warnung in Abhängigkeit von der Kritikalität verändert erfolgen.

Dabei kann sich eine Veränderung einer Warnung auch so äußern, dass gegebenenfalls andere Warnsignale gegeben werden. Beispielsweise kann eine bestimmte Warnausgabe, beispielsweise eine akustische oder optische Warnung, je nach Situation verändert werden, beispielsweise durch eine veränderte Lautstärke bzw. andere Anzeigesymbole usw. Ebenso ist es denkbar, dass situationsabhängig unterschiedliche Arten von Warnungen gegeben werden, beispielsweise akustische und optische Warnungen gleichzeitig oder nur akustische Warnungen usw.

Bei fehlender Betätigung wenigstens eines Mittels zur Anzeige einer Spurwechselabsicht seitens des Fahrers des Kraftfahrzeugs kann wenigstens eine Warnung verändert und/oder unterdrückt und/oder erzeugt werden. Dementsprechend sollen beim erfindungsgemäßen Verfahren potentielle Spurwechsel in den Warn- bzw. Unterstützungsmechanismus mit einbezogen werden. Dies bedeutet, dass erfindungsgemäß eine gewisse Unabhängigkeit der Fahrerassistenzsysteme vom Setzen eines Blinksignals oder einer anderen Anzeige einer Spurwechselabsicht erreicht wird. Das Setzen des Blinkers ist erfindungsgemäß z. B. keine Voraussetzung, damit bei einer Spurwechselunterstützung eine Warnung überhaupt erzeugt wird. Damit wird die Akzeptanz von Fahrerassistenzsystemen deutlich erhöht, da ein nicht unbeträchtlicher Anteil, von Spurwechseln erfahrungsgemäß ohne Setzen eines Blinksignals erfolgt. Bei bisherigen Fahrerassistenzsystemen, die sich auf die Fahrzeugquerführung beziehen, wird dies jedoch nicht berücksichtigt, so dass die Warnungen entweder fälschlicherweise nicht oder auch dann erfolgen, wenn sie überhaupt nicht notwendig sind. Dies wird erfindungsgemäß durch die Einbeziehung einer fehlenden Betätigung eines Mittels zur Anzeige einer Spurwechselabsicht in den Betrieb des Fahrerassistenzsystems vermieden.

Um dennoch das Fehlen einer Anzeige einer Spurwechselabsicht hervorzuheben bzw. zu berücksichtigen, können die Warnungen erfindungsgemäß verändert erzeugt werden, also beispielsweise bei Setzen des Blinkers bei einem System zur Unterstützung eines Spurwechsels stärker (z. B. häufiger, lauter usw.) erfolgen als ohne Setzen des Blinkers, wenn lediglich ein potentieller Spurwechsel vermutet wird. Entsprechend kann auch die Warnung früher oder später, also bereits früh bei einer Blinkerbetätigung bzw. später bei einem konkreten Ausscheren aus der Spur, erfolgen. Erfindungsgemäß wird dadurch die bisher übliche starre Abhängigkeit von einer Blinkersignalgabe aufgehoben zugunsten einer variablen Warnung auch in dem Fall, dass der Blinker beispielsweise trotz einer vorhandenen und erkannten Spurwechselabsicht nicht gesetzt wird.

Als wenigstens eine auf wenigstens ein Fahrzeug auf einer benachbarten Fahrspur bezogene (und eine Querführungsaktion indizierende) Fahrsituation kann seitens des Fahrerassistenzsystems ein an ein Fahrzeug auf einer benachbarten Spur angepasstes versetztes Fahren und/oder ein kooperatives Verhalten im Bereich einer Auffahrt, insbesondere einer Autobahnauffahrt, und/oder es kann als wenigstens eine auf den Zustand der eigenen Fahrspur bezogene Fahrsituation ein Wegfall der eigenen Fahrspur und/oder ein Straßenschaden und/oder ein Gegenstand auf der eigenen Fahrspur erkannt werden.

Es werden also erfindungsgemäß unterschiedlichste Fahrsituationen, die Grundlage für Querführungsmaßnahmen sein können, für die Warngabe des Fahrerassistenzsystems berücksichtigt, also insbesondere nicht nur eine Fahrsituation, die durch das Überholen eines langsameren Fahrzeugs gegeben ist. Beispielhaft zu nennen für eine zu berücksichtigende Fahrsituation ist ein versetztes Fahren in der eigenen Spur, das angepasst an ein Fahrzeug auf einer benachbarten Spur erfolgt. Ein derartiges bewusstes versetztes Fahren erfolgt unter anderem häufig in Stausituationen und sollte beispielsweise bei einem System, das vor einem unbeabsichtigten Verlassen der eigenen Fahrspur warnen soll, nicht zu einer Warnung führen. Gegebenenfalls kann auch statt einem völligen Unterbleiben der Warnung eine Warnung auf einer geringeren Warnstufe erfolgen.

Eine weitere erfindungsgemäß berücksichtigte Fahrsituation kann das kooperative Verhalten im Bereicht einer Auffahrt sein, insbesondere beim Auffahren auf eine Autobahn, wobei ein Spurwechselwunsch dann dadurch entsteht, dass das eigene Fahrzeug an einer Auffahrt auf der äußersten rechten Spur entlangfährt, während sich ein anderes Fahrzeug auf dem Beschleunigungsstreifen befindet, wobei dem anderen Fahrzeug durch kooperatives Verhalten, also einen Wechsel auf eine Spur weiter links, ein Einscheren auf die Autobahn ermöglicht werden soll. Dabei kann die Warnung in Abhängigkeit der Kritikalität dieses Spurwechsels, also beispielsweise der Differenzgeschwindigkeit der Fahrzeuge bzw. zu weiteren Fahrzeugen bzw. der Situation auf der eigenen Fahrspur im vorausliegenden Bereich oder der Situation auf der für den Wechsel vorgesehenen Spur weiter links gegeben werden.

Eine weitere nennenswerte Fahr- bzw. Verkehrssituation ist ein Wegfall der eigenen Fahrspur. Ein derartiger Wegfall der eigenen Fahrspur ist vor allem auf Autobahnen häufig, wenn beispielsweise das Ende einer je Fahrtrichtung dreistreifigen Ausbausituation erreicht ist. Der Wegfall einer Spur kann beispielsweise anhand eines Navigationsgeräts, gegebenenfalls auch alternativ oder ergänzend mittels einer Bildverarbeitung z. B. von Bildern einer Kamera im Fahrzeug oder auf Grund einer Analyse des Vorverkehrs erkannt werden. In diesem Fall kann eine Warnung eines Querführungssystems, das auf das Einhalten der eigenen Fahrspur gerichtet ist, unterdrückt werden, wenn der Spurwechsel wahrscheinlich ist und verschiedene Indizien einen Spurwechsel erwarten lassen. In ganz ähnlicher Art und Weise entsteht bei Straßenschäden, beispielsweise Schlaglöchern, oder auch Gegenständen auf der eigenen Fahrspur, beispielsweise Reifenteilen oder dergleichen, ein Spurwechselwunsch, bei dem keine Warnung eines auf die Einhaltung der Fahrspur gerichteten Fahrassistenzsystems erfolgen sollte.

Insbesondere kann eine auf den Zustand der eigenen Fahrspur und/oder ein Fahrzeug auf einer benachbarten Fahrspur bezogene Fahrsituation in Abhängigkeit von Daten wenigstens einer Navigationseinrichtung und/oder wenigstens eines Bildverarbeitungsverfahrens und/oder wenigstens einer Analyse vorausfahrender Fahrzeuge erkannt werden. Ebenso kann gegebenenfalls eine auf einen Navigationswunsch bezogene Fahrsituation in Abhängigkeit von routenbezogenen Daten wenigstens einer Navigationseinrichtung erkannt werden.

Beispielsweise kann dem Datenmaterial eines Navigationsgeräts eine Information dahingehend vorliegen, ob die aktuell befahrene Fahrspur demnächst endet bzw. sich in der Nähe eine Autobahnauffahrt befindet. Des Weiteren können alternativ oder ergänzend Bildverarbeitungsverfahren verwendet werden, die beispielsweise zur Verarbeitung von Aufnahmen von Kameras eingesetzt werden, die den Fahrerassistenzsystemen zuzurechnen sind bzw. die weiteren Fahrzeugeinrichtungen, gegebenenfalls auch einem Navigationsgerät, zuzuordnen sind oder spezifisch zur Durchführung des erfindungsgemäßen Verfahrens eingebaut wurden. Anhand der Kamerabilder lässt sich dann im Rahmen einer Auswertung feststellen, ob die eigene Fahrspur weiterhin existiert bzw. ob auf der aktuell befahrenen Fahrspur Hindernisse oder dergleichen vorhanden sind. Eine Fahrsituation, die einen Bezug zu einem Navigationswunsch hat und erfindungsgemäß ebenfalls Berücksichtigung finden kann, kann beispielsweise anhand von Daten einer Navigationseinrichtung erkannt werden. Zu nennen ist beispielsweise der Fall, wenn der Fahrer eine gewünschte Route, der er folgen möchte, eingegeben hat, aus der sich aktuell ergibt, dass in Kürze ein Verlassen einer derzeit befahrenen Autobahn erforderlich ist, so dass ein Wechsel auf die rechte Spur nötig wird.

Weiterhin kann das Fahrerassistenzsystem bzw. ein Fahrerassistenzsystem, das gemäß dem erfindungsgemäßen Verfahren betrieben wird, den Zustand der eigenen Fahrspur und/oder wenigstens ein auf einer benachbarten Spur, insbesondere versetzt und/oder im Bereich einer Auffahrt, fahrendes Fahrzeug anhand wenigstens eines Sensormittels, insbesondere anhand wenigstens eines Blind-Spot-Detection-Sensormittels, erkennen. Eine derartige Erkennung z. B. von Fahrzeugen auf benachbarten Spuren kann beispielsweise mit Hilfe eines Kamerasystems bzw. einer schwenkbaren Kamera erfolgen, mit der bevorzugterweise besonders der Bereich des "toten Winkels" abgedeckt wird. Selbstverständlich können neben einer Kamera ebenso andere Sensormittel, die in Fahrzeugen Verwendung finden, der Fahrzeugerkennung dienen. Dabei können andere Verfahren zur Objekterkennung wie beispielsweise Radar oder Ultraschall oder dergleichen auch ergänzend zu Kameras wie Tageslicht- bzw. Infrarotkameras usw. verwendet werden.

Erfindungsgemäß kann eine erkannte Fahrsituation seitens wenigstens eines Fahrerassistenzsystems, insbesondere seitens mehrerer miteinander kommunizierender Fahrerassistenzsysteme, analysiert werden, insbesondere im Hinblick auf Differenzgeschwindigkeiten und/oder Abstände zu Fremdfahrzeugen und/oder wenigstens eine Zeitlücke und/oder wenigstens eine Änderung einer Zeitlücke und/oder eine voraussichtliche Zeit bis zu einer Kollision und/oder eine Differenz zwischen einer Wunsch- und Istgeschwindigkeit und/oder das Vorhandensein einer Ausweichspur und/oder die Position von Fremdfahrzeugen.

Eine Fahrsituation wird also zunächst prinzipiell erkannt, beispielsweise mit Hilfe einer Kamera, und daraufhin analysiert, wozu insbesondere mehrere Fahrerassistenzsysteme, die in dem Kraftfahrzeug vorhanden sind, zusammenwirken, also kommunizieren können. Beispielsweise ist hierzu eine Vernetzung von Fahrerassistenzsystemen, die einen Spurwechsel unterstützen bzw. ein Spurhalten sicherstellen sollen, möglich. Gegebenenfalls können auch weitere Fahrerassistenzsysteme, die nicht der Querführung dienen, also beispielsweise Längsführungssysteme, mit den Querführungsfahrerassistenzsystemen kommunizieren und in die Analyse der Fahrsituation einbezogen werden.

Dabei kann die Analyse der Fahrsituation im Hinblick auf unterschiedliche Kriterien erfolgen. Beispielsweise können Differenzgeschwindigkeiten zu Fahrzeugen nicht nur auf der eigenen Spur, sondern insbesondere auch auf benachbarten Spuren, beispielsweise beim Einfädelnlassen an einer Autobahnauffahrt, berücksichtigt werden. Ebenso können Abstände zu Fremdfahrzeugen in die Analyse einbezogen werden. Diese Abstände betreffen nicht nur die Fahrzeuge auf der eigenen Spur, sondern insbesondere bei einem Spurwechsel auf eine benachbarte Spur auch die Fahrzeuge vor und hinter der auf dieser Zielspur einzunehmenden Position des eigenen Fahrzeugs.

Ebenso werden vorteilhaft die Zeitlücken zu den anderen Fahrzeugen oder auch zu Hindernissen auf der Fahrspur berücksichtigt. Dabei kann unter Umständen auch eine Änderung einer solchen Zeitlücke eine Rolle spielen. Ein weiterer wichtiger Faktor ist die voraussichtliche Zeit bis zum Eintreten einer Kollision bzw. die Differenz zwischen einer gewünschten Geschwindigkeit und der tatsächlich vorhandenen aktuellen Geschwindigkeit. Weiterhin ist zu berücksichtigen, ob überhaupt eine Ausweichspur für einen potentiellen Fahrwechsel vorhanden ist bzw. wie die Positionen von Fremdfahrzeugen aussehen. Dabei wird in die Analyse vorzugsweise die Position aller Fahrzeuge auf der Start- und Zielspur einbezogen.

Durch Berücksichtigung aller dieser Kriterien in der Analyse kann ein potentieller Spurwechsel, unabhängig vom Setzen eines Blinksignals, nicht nur erkannt, sondern auch im Hinblick auf eine möglichst optimale Warngabe durch das Fahrerassistenzsystem analysiert werden.

Die Erkennung der Fahrsituation und/oder eine Auswertung einer erkannten Fahrsituation kann unter Berücksichtigung prädiktiver Streckendaten und/oder von Spurwechselindizien durchgeführt werden, insbesondere unter Berücksichtigung einer Querabweichung und/oder eines Lenkradwinkels und/oder einer Quergeschwindigkeit und/oder einer Lichtzeichengabe und/oder eines Verkehrszeichens und/oder einer Anzeige einer Spurwechselabsicht.

Um die gegenwärtige Fahrsituation tatsächlich zu erkennen und damit Aussagen über einen potentiellen Spurwechsel treffen zu können, werden also prädiktive Streckendaten bzw. Spurwechselindizien herangezogen. Als prädiktive Streckendaten sind beispielsweise das Vorhandensein und Erkennen einer Auffahrt im Hinblick auf die Fahrsituation eines kooperativen Verhaltens im Bereich einer Auffahrt zu nennen. Daneben können unterschiedliche Spurwechselindizien Berücksichtigung finden, wie beispielsweise eine Querabweichung, ein spezieller Lenkradwinkel bzw. eine Quergeschwindigkeit und dergleichen. Des Weiteren können auch Verkehrszeichen oder Lichtzeichen bzw. die Anzeige eines Spurwechsels durch den Fahrer, beispielsweise das Setzen eines Blinkers, berücksichtigt werden. Unter anderem kann ein Verkehrszeichen, das mit einer Kamera erfasst und dem im Rahmen eine Bildverarbeitung einer bestimmten Bedeutung zugeordnet wird, darauf hinweisen, dass die eigene Fahrspur in Kürze endet, so dass ein Wechsel auf eine andere Fahrspur unvermeidlich ist und somit eine Spurwechselabsicht unterstellt werden kann.

Wird beispielsweise anhand der Navigationsdaten erkannt, dass ein Spurwechsel durch den Wegfall der eigenen Fahrspur erforderlich ist, so kann auch in dem Fall, dass der Fahrer keinen Blinker gesetzt hat, eine Warnstufe für ein System zur Unterstützung eines Spurwechsels gesetzt werden, wobei eine Freigabe des Spurwechsels insbesondere auch ohne Blinkergabe erfolgen kann. Weiterhin kann bei Navigationsdaten, die Spurwechselindizien darstellen, auch ohne Setzen des Blinkers eine Akutwarnung für den Fahrer erfolgen, wenn die Indizien auf einen Spurwechsel schließen lassen. In diesem Fall wird eine Akutwarnung eines einen Spurwechsel unterstützenden Systems früher ausgegeben.

Außerdem kann wenigstens eine seitens des Fahrerassistenzsystems vorgesehene Warnung eines Fahrers des Kraftfahrzeugs (weiterhin) in Abhängigkeit wenigstens einer mittels des Fahrerassistenzsystems erkannten und auf wenigstens einen Navigationswunsch und/oder einen Überholvorgang bezogenen und eine Querführungsaktion indizierenden Fahrsituation verändert und/oder unterdrückt und/oder erzeugt werden.

Es werden also gegebenenfalls nicht nur die Fälle der Kooperation im Bereich einer Auffahrt bzw. eines bewussten versetzten Fahrens oder des Wegfalls bzw. eines (schlechten) Zustands der eigenen Fahrspur, sondern ergänzend auch Navigationswünsche, die beispielsweise über die Routenführung, die einer Navigationseinrichtung bekannt ist, vorgegeben werden, und/oder Überholvorgänge, die sich auf langsameren Verkehr auf der eigenen Fahrspur beziehen, berücksichtigt, um entsprechend die Warngaben der Querführungssysteme zu verändern bzw. anzupassen. Damit kann eine derart differenzierte Warngabe erfolgen, dass alle relevanten Verkehrssituationen abgedeckt werden.

Darüber hinaus betrifft die Erfindung ein Kraftfahrzeug mit einem gemäß einem Verfahren wie vorstehend geschildert betriebenen auf das Einhalten der aktuellen Fahrspur eines Kraftfahrzeugs bezogenen Fahrerassistenzsystems. Das Kraftfahrzeug weist also ein Fahrerassistenzsystem bzw. mehrere Fahrerassistenzsysteme auf, die zum Betrieb derart ausgebildet sind, dass eine Warnung eines Fahrers des Kraftfahrzeugs in Abhängigkeit wenigstens einer mittels des Fahrerassistenzsystems erkannten und auf wenigstens ein Fahrzeug auf einer benachbarten Fahrspur und/oder den Zustand der eigenen Fahrspur bezogenen und eine Querführungsaktion indizierenden Fahrsituation veränderbar bzw. unterdrückbar und/oder erzeugbar ist. Daneben kann die Warngabe auch abhängig von erkannten Navigations- bzw. Überholwünschen verändert werden.

Hierzu weist das Kraftfahrzeug, insbesondere die Fahrerassistenzsysteme des Kraftfahrzeugs, gegebenenfalls geeignete Sensormittel zur Erkennung dieser Verkehrssituationen sowie geeignete Steuerungs- und/oder Verarbeitungseinrichtungen zur Analyse der Daten dieser Sensoren auf. Des Weiteren sind Mittel zur Warngabe erforderlich, also beispielsweise Mittel für eine optische und/oder akustische Warnung des Fahrers wie Lautsprechereinrichtungen oder Displays.

Weitere Vorteile, Merkmale und Einzelheiten der Erfindung ergeben sich anhand der folgenden Ausführungsbeispiele sowie aus den Zeichnungen. Dabei zeigen:
- Fig. 1: ein erfindungsgemäßes Kraftfahrzeug,
- Fig. 2: eine Darstellung zur Erläuterung eines bewussten Versetztfahrens im Rahmen eines erfindungsgemäßen Verfahrens,
- Fig. 3: eine Darstellung zur Fahrsituation des Wegfalls der eigenen Fahrspur und
- Fig. 4: eine Darstellung zur Fahrsituation des kooperativen Verhaltens im Bereich einer Auffahrt.

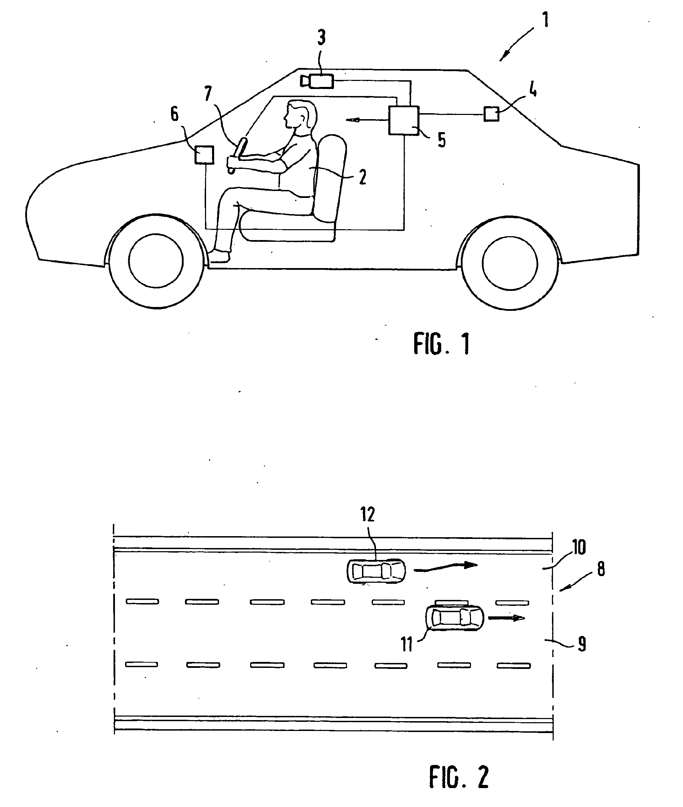

In der Fig. 1 ist ein erfindungsgemäßes Kraftfahrzeug 1 gezeigt, das den Fahrer 2 über mehrere die Querführung betreffende Fahrerassistenzsysteme bei der Führung des Kraftfahrzeugs 1 unterstützt.

Diese auf die Querführung gerichteten Fahrerassistenzsysteme verfügen über mehrere Sensormittel, wozu hier beispielhaft eine in dieser Darstellung in das Vorfeld des Kraftfahrzeugs gerichtete Kamera 3 sowie ein rückwärtig im Kraftfahrzeug 1 angeordnetes Sensormittel 4 dargestellt sind. Die Kamera 3 ist (per automatischer Steuerung) schwenkbar, um auch eine Überwachung des Seitenbereichs des Kraftfahrzeugs 1 durchführen zu können.

Die Daten der Sensormittel, also beispielsweise der Kamera 3 sowie des rückwärtig angeordneten Sensormittels 4, werden an eine Steuerungs- und Verarbeitungseinrichtung 5 weitergeleitet, in der eine Analyse der Daten erfolgt. Eine weitere Verbindung besteht zwischen der Steuerungs- und Verarbeitungseinrichtung 5 sowie einem Navigationsgerät 6, in dem beispielsweise die Daten für eine aktuell geplante Route abgelegt sind.

Anhand dieser sensorgenerierten bzw. navigationsbezogenen Daten kann durch eine geeignete Verarbeitung in der Steuerungs- und Verarbeitungseinrichtung 5 eine Fahrsituation erkannt werden. Dabei können auch weitere Spurwechselindizien berücksichtigt werden, beispielsweise der aktuelle Winkel des Lenkrads 7, der ebenfalls ermittelt und der Steuerungs- und Verarbeitungseinrichtung 5 zugeführt wird. Anhand dieser Daten schließt die Steuerungs- und/oder Verarbeitungseinrichtung 5 auf einen potentiellen Spurwechsel zurück, wobei selbstverständlich hier nicht erwähnte Spurwechselindizien wie die Querabweichung und die Quergeschwindigkeit bzw. das Setzen eines Blinkers und dergleichen Berücksichtigung finden können, ebenso Daten weiterer Sensoren und dergleichen.

Selbstverständlich können in anderen Ausführungsbeispielen statt einer einzigen Steuerungs- und Verarbeitungseinrichtung 5 mehrere Steuerungs-und/oder Verarbeitungseinrichtungen vorhanden sein, beispielsweise für jedes Fahrerassistenzsystem eine geeignete eigene derartige Einrichtung, wobei jedoch zweckmäßigerweise eine Kommunikationsmöglichkeit bzw. Vernetzung zwischen den einzelnen Fahrerassistenzsystemen gegeben sein sollte.

Werden nun die Fahr- bzw. Verkehrssituationen erkannt, insbesondere als Fahrsituationen, die sich auf ein Fahrzeug auf einer benachbarten Spur bzw. den Zustand der eigenen Fahrspur beziehen und die eine Querführungsaktion wie einen Spurwechsel oder ein Versetztfahren in der eignen Spur indizieren, so kann entsprechend eine Warngabe eines auf die Querführung gerichteten Fahrerassistenzsystems des erfindungsgemäßen Kraftfahrzeugs 1 an diese Situation angepasst erfolgen, also insbesondere in veränderter Form, beispielsweise zeitlich früher bzw. stärker oder schwächer, und/oder unterdrückt oder lediglich auf Grund dieser erkannten Fahrsituation erzeugt werden.

Dabei sind die erkannten Fahrsituationen die Fahrsituationen, die für die Warngabe des Fahrerassistenzsystems ausschlaggebend sind, also keine zusätzlichen Parameter, die lediglich in der weiteren Betrachtung eine Rolle spielen. Grundlage der Erfindung ist es also nicht, bei einem Spurwechsel auf Grund eines langsam fahrenden Vorfahrzeugs zusätzlich den Verkehr der benachbarten Spur zu berücksichtigen, sondern als eine Fahrsituation, die grundlegend für die Warngabe bzw. das Auslösen einer Warngabe eines Fahrerassistenzsystems ist, den Verkehr bzw. die Fahrzeuge auf einer benachbarten Fahrspur bzw. den Zustand der eigenen Fahrspur, heranzuziehen. Dies sind als Situationen, die Querführungsmaßnahmen nach sich ziehen können, grundlegende bzw. ausschlaggebende Fahr- und/oder Verkehrssituationen für die Warngabe des Fahrerassistenzsystems, wobei selbstverständlich andere Aspekte, die beispielsweise die Kritikalität eines durch eine solche Verkehrssituation wahrscheinlichen Spurwechsels betreffen, ergänzend berücksichtigt werden.

Die Fig. 2 zeigt eine Darstellung 8 zu einem bewussten Versetztfahren im Rahmen eines erfindungsgemäßen Verfahrens. Dabei befindet sich auf der Spur 9 rechts von der eigenen Spur 10 ein Fremdfahrzeug 11, das in seiner Fahrspur 9 relativ weit links fährt. Ein derartiges Fahrverhalten kommt beispielsweise in Stausituationen vor. Daran angepasst fährt das eigene Fahrzeug 12 nun ebenfalls nach links, also in der gleichen Richtung versetzt wie das fremde Kraftfahrzeug 11.

In einem solchen Fall kann erfindungsgemäß eine Warnunterdrückung eines auf die Querführung im Sinne eines Einhaltens einer aktuellen Fahrspur gerichteten Fahrerassistenzsystems erfolgen. Es wird also diese grundlegende Fahrsituation des Versetztfahrens im Hinblick auf ein entsprechendes Verhalten eines Fahrzeugs auf einer benachbarten Spur, hier der Fahrspur 9, erkannt und entsprechend eine Warnung, die ansonsten gegeben würde, unterdrückt. Das versetzte Fahren wird also als gewollte Fahrerhandlung zur Wahrung eines seitlichen Sicherheitsabstands z. B. während des Vorbeifahrens an dem Fremdfahrzeug 11 erkannt und dementsprechend wird keine Warnung, die in diesem Falle nur störend wäre, erzeugt.

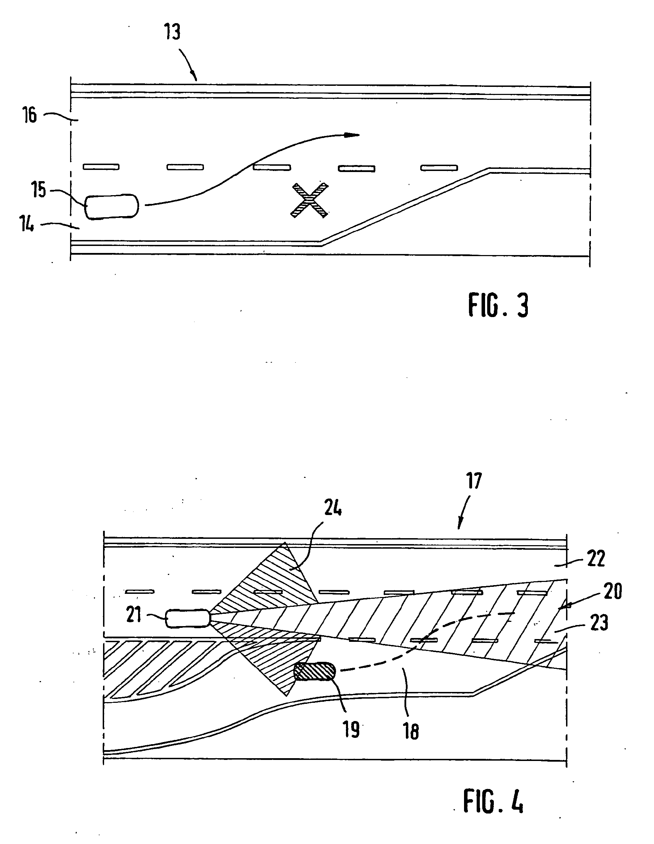

Die Fig. 3 zeigt eine entsprechende Darstellung 13 zur Fahrsituation des Wegfalls der eigenen Fahrspur 14. Hierbei wird, insbesondere anhand eines Kamerasystems, das gegebenenfalls mit einer Navigationseinrichtung kombiniert ist, erkannt, dass die Fahrspur 14, auf der sich das eigene Fahrzeug 15 aktuell befindet, in Kürze wegfällt, so dass ein Wechsel auf die links benachbarte Spur 16 unumgänglich ist. In diesem Fall erfolgt erfindungsgemäß keine Warnung eines auf das Einhalten einer aktuellen Fahrspur gerichteten Fahrerassistenzsystems, sofern dies nicht auf Grund des Verkehrs auf der benachbarten Spur 16 unbedingt erforderlich ist. Damit wird dem Fahrer des Kraftfahrzeugs 15 ein Wechsel auf die benachbarte Spur 16 auch dann ermöglicht, wenn er seinen Spurwechsel nicht explizit durch ein Blinkzeichen angezeigt hat, ohne dass eine in diesem Fall ebenfalls lediglich störende Warnung eines für eine Spurverlassenswarnung ausgebildeten Querführungsfahrerassistenzsystems erfolgen würde.

Die Fig. 4 zeigt schließlich eine Darstellung 17 einer Fahrsituation des kooperativen Verhaltens im Bereich einer Auffahrt 18. Hier befindet sich im Bereich der Auffahrt 18 ein Fremdfahrzeug 19, das auf die Autobahn 20 auffahren möchte. Das eigene Fahrzeug 21 erleichtert diesem Fremdfahrzeug 19 das Einfädeln durch einen seinerseits vorgenommenen Spurwechsel auf die benachbarte linke Spur 22 neben der rechten Spur 23, auf der sich das eigene Fahrzeug 21 gegenwärtig befindet.

Dabei erfolgt die Erkennung des Fremdfahrzeugs 19 über Sensormittel, mit denen ein Sensorfeld 24, das auch die benachbarten Spuren abdeckt, erzeugt wird. So können Fahrzeuge auf diesen benachbarten Spuren bzw. Gegenstände und dergleichen erkannt werden. Im Falle eines Erkennens dieser Fahrsituation, dass nämlich eine Einfädelhilfe gegeben werden soll, wird keine Warnung eines auf die Einhaltung der aktuellen Fahrspur 23 gerichteten Querführungssystems gegeben, wenn der Fahrer des eigenen Kraftfahrzeugs 21, wie dies auf Grund der vorliegenden Fahrsituation sinnvoll ist, auf die benachbarte linke Spur 22 wechselt, selbst wenn er hierzu keinen Blinker setzt.

So erfolgt erfindungsgemäß die Warngabe von Querführungsassistenzsystemen angepasst an die jeweilige aktuell seitens des Fahrerassistenzsystems erkannte Fahrsituation, wobei eine differenzierte Betrachtung unterschiedlichster Fahrsituationen erfolgt. Dadurch können unnötige Warnungen verhindert werden und andererseits gezielt Warnungen angepasst an die aktuelle Fahrsituation gegeben werden, wodurch nicht zuletzt die Akzeptanz der Fahrerassistenzsysteme durch den Fahrer erhöht werden kann, wenn dieser merkt, dass die Warnungen nicht starren Regeln folgen, sondern flexibel und in verhältnismäßiger bzw. vernünftiger Weise gegeben werden.

## Patentansprüche

1. Verfahren zum Betrieb eines auf das Einhalten der aktuellen Fahrspur eines Kraftfahrzeugs (1, 12, 15, 21) bezogenen Fahrerassistenzsystems,
**dadurch gekennzeichnet,**
**dass** wenigstens eine seitens des Fahrerassistenzsystems vorgesehene Warnung eines Fahrers (2) des Kraftfahrzeugs (1,12,15,21) in Abhängigkeit wenigstens einer mittels des Fahrerassistenzsystems erkannten und auf wenigstens ein Fahrzeug (11, 19) auf einer benachbarten Fahrspur (9) und/oder den Zustand der eigenen Fahrspur (10, 14, 23) bezogenen und eine Querführungsaktion indizierenden Fahrsituation verändert und/oder unterdrückt und/oder erzeugt wird.

2. Verfahren nach Anspruch 1,
**dadurch gekennzeichnet,**
**dass** bei einem auf die Querführung eines Kraftfahrzeugs (1, 12, 15, 21) im Sinne eines Einhaltens einer Fahrspur bezogenen Fahrerassistenzsystem wenigstens eine Warnung unterdrückt und/oder bei einem auf die Querführung des Kraftfahrzeugs (1, 12, 15, 21) im Sinne einer Unterstützung eines Fahrspurwechsels bezogenen Fahrerassistenzsystem eine Warnung erzeugt wird und/oder eine Warnung in Abhängigkeit von einer erkannten Kritikalität verändert wird.

3. Verfahren nach einem der vorangehenden Ansprüche,
**dadurch gekennzeichnet,**
**dass** bei fehlender Betätigung wenigstens eines Mittels zur Anzeige einer Spurwechselabsicht seitens des Fahrers des Kraftfahrzeugs (1, 12, 15, 21) wenigstens eine Warnung verändert und/oder unterdrückt und/oder erzeugt wird.

4. Verfahren nach einem der vorangehenden Ansprüche,
**dadurch gekennzeichnet,**
**dass** als wenigstens eine auf wenigstens ein Fahrzeug (11, 19) auf einer benachbarten Fahrspur (9) bezogene Fahrsituation seitens des Fahrerassistenzsystems ein an ein Fahrzeug (11, 19) auf einer benachbarten Fahrspur (9) angepasstes versetztes Fahren und/oder ein kooperatives Verhalten im Bereich einer Auffahrt, insbesondere einer Autobahnauffahrt, und/oder als wenigstens eine auf den Zustand der eigenen Fahrspur (14) bezogene Fahrsituation ein Wegfall der eigenen Fahrspur (14) und/oder ein Straßenschaden und/oder ein Gegenstand auf der eigenen Fahrspur erkannt werden.

5. Verfahren nach einem der vorangehenden Ansprüche,
**dadurch gekennzeichnet,**
**dass** eine auf den Zustand der eigenen Fahrspur (10, 14, 23) und/oder ein Fahrzeug (11, 19) auf einer benachbarten Fahrspur (9) bezogene Fahrsituation in Abhängigkeit von Daten wenigstens einer Navigationseinrichtung und/oder wenigstens eines Bildverarbeitungsverfahrens und/oder wenigstens einer Analyse vorausfahrender Fahrzeuge erkannt wird:

6. Verfahren nach einem der vorangehenden Ansprüche,
**dadurch gekennzeichnet,**
**dass** das Fahrerassistenzsystem den Zustand der eigenen Fahrspur (10, 14, 23) und/oder wenigstens ein auf einer benachbarten Fahrspur (9), insbesondere versetzt und/oder im Bereich einer Auffahrt, fahrendes Fahrzeug anhand wenigstens eines Sensormittels, insbesondere anhand wenigstens eines Blind-Spot-Detection-Sensormittels, erkennt.

7. Verfahren nach einem der vorangehenden Ansprüche,
**dadurch gekennzeichnet,**
**dass** eine erkannte Fahrsituation seitens wenigstens eines Fahrerassistenzsystems, insbesondere seitens mehrerer miteinander kommunizierender Fahrerassistenzsysteme, analysiert wird, insbesondere im Hinblick auf Differenzgeschwindigkeiten und/oder Abstände zu Fremdfahrzeugen (11, 19) und/oder wenigstens eine Zeitlücke und/oder wenigstens eine Änderung einer Zeitlücke und/oder eine voraussichtliche Zeit bis zu einer Kollision und/oder eine Differenz zwischen einer Wunsch- und Istgeschwindigkeit und/oder das Vorhandensein einer Ausweichspur und/oder die Position von Fremdfahrzeugen (11, 19).

8. Verfahren nach einem der vorangehenden Ansprüche,
**dadurch gekennzeichnet,**
**dass** die Erkennung der Fahrsituation und/oder eine Auswertung einer erkannten Fahrsituation unter Berücksichtigung prädiktiver Streckendaten und/oder von Spurwechselindizien durchgeführt wird, insbesondere unter Berücksichtigung einer Querabweichung und/oder eines Lenkradwinkels und/oder einer Quergeschwindigkeit und/oder einer Lichtzeichengabe und/oder eines Verkehrszeichens und/oder einer Anzeige einer Spurwechselabsicht.

9. Verfahren nach einem der vorangehenden Ansprüche,
**dadurch gekennzeichnet,**
**dass** wenigstens eine seitens des Fahrerassistenzsystems vorgesehene Warnung eines Fahrers (2) des Kraftfahrzeugs (1, 12, 15, 21) in Abhängigkeit wenigstens einer mittels des Fahrerassistenzsystems erkannten und auf wenigstens einen Navigationswunsch und/oder einen Überholvorgang bezogenen und eine Querführungsaktion indizierenden Fahrsituation verändert und/oder unterdrückt und/oder erzeugt wird.

10. Kraftfahrzeug (1, 12, 15, 21) mit einem gemäß einem Verfahren nach einem der vorangehenden Ansprüche betriebenen auf das Einhalten der aktuellen Fahrspur eines Kraftfahrzeugs (1, 12, 15, 21) bezogenen Fahrerassistenzsystem.

## Claims

1. Method for the operation of a driver assistance system for keeping to the current lane of a motor vehicle (1, 12, 15, 21),
**characterized**
**in that** at least one warning provided by the driver assistance system for a driver (2) of the motor vehicle (1, 12, 15, 21) is altered and/or suppressed and/or produced on the basis of at least one travel situation which is recognized by means of the driver assistance system and relates to at least one vehicle (11, 19) in an adjacent lane (9) and/or to the state of the vehicle's own lane (10, 14, 23) and indicates a lateral guidance action.

2. Method according to Claim 1,
**characterized**
**in that** a driver assistance system for the lateral guidance of a motor vehicle (1, 12, 15, 21) for the purpose of keeping to a lane prompts at least one warning to be suppressed and/or a driver assistance system for the lateral guidance of the motor vehicle (1, 12, 15, 21) for the purpose of assisting a lane change prompts a warning to be produced and/or a warning to be altered on the basis of an identified criticality.

3. Method according to one of the preceding claims,
**characterized**
**in that** the absence of operation of at least one means for indicating an intention to change lane by the driver of the motor vehicle (1, 12, 15, 21) prompts at least one warning to be altered and/or suppressed and/or produced.

4. Method according to one of the preceding claims,
**characterized**
**in that** at least one travel situation identified by the driver assistance system for at least one vehicle (11, 19) in an adjacent lane (9) is off-centre driving to match a vehicle (11, 19) in an adjacent lane (9) and/or cooperative behaviour in the area of a slip road, particularly a motorway slip road, and/or at least one travel situation identified for the state of the vehicle's own lane (14) is discontinuation of the vehicle's own lane (14) and/or road damage and/or an object in the vehicle's own lane.

5. Method according to one of the preceding claims,
**characterized**
**in that** a travel situation for the state of the vehicle's own lane (10, 14, 23) and/or a vehicle (11, 19) in an adjacent lane (9) is identified on the basis of data from at least one navigation device and/or at least one image processing method and/or at least one analysis of vehicles in front.

6. Method according to one of the preceding claims,
**characterized**
**in that** the driver assistance system identifies the state of the vehicle's own lane (10, 14, 23) and/or at least one vehicle travelling in an adjacent lane (9), in particular off-centre and/or in the area of a slip road, using at least one sensor means, particularly using at least one blind spot detection sensor means.

7. Method according to one of the preceding claims,
**characterized**
**in that** an identified travel situation is analysed by at least one driver assistance system, particularly by a plurality of driver assistance systems communicating with one another, in particular in respect of differential speeds and/or distances from other vehicles (11, 19) and/or at least one time interval and/or at least one change in a time interval and/or a probable time to a collision and/or a difference between a desired speed and an actual speed and/or the presence of an alternative lane and/or the position of other vehicles (11, 19).

8. Method according to one of the preceding claims,
**characterized**
**in that** the travel situation is identified and/or an identified travel situation is evaluated taking into account predictive route data and/or lane change indices, in particular taking into account a lateral deviation and/or a steering wheel angle and/or a lateral speed and/or a light signal and/or a road sign and/or an indication of intention to change lane.

9. Method according to one of the preceding claims,
**characterized**
**in that** at least one warning provided by the driver assistance system for a driver (2) of the motor vehicle (1, 12, 15, 21) is altered and/or suppressed and/or produced on the basis of at least one travel situation identified by means of the driver assistance system and based on at least one navigation requirement and/or an overtaking manoeuvre and indicating a lateral guidance action.

10. Motor vehicle (1, 12, 15, 21) having a driver assistance system which is operated using a method according to one of the preceding claims and is based on keeping to the current lane of a motor vehicle (1, 12, 15, 21)

## Revendications

1. Procédé pour faire fonctionner un système d'assistance au conducteur rapporté au maintien de la voie de circulation actuelle d'un véhicule automobile (1, 12, 15, 21),
**caractérisé en ce que**
au moins un avertissement d'un conducteur (2) du véhicule automobile (1, 12, 15, 21), prévu du côté du système d'assistance au conducteur, est modifié et/ou supprimé et/ou produit en fonction d'au moins une situation de conduite détectée au moyen du système d'assistance au conducteur, rapportée à au moins un véhicule (11, 19) sur une voie de circulation adjacente (9) et/ou à l'état de la voie de circulation propre (10, 14, 23), et induisant une action de traversée.

2. Procédé selon la revendication 1,
**caractérisé en ce que**
dans le cas d'un système d'assistance au conducteur rapporté à la traversée d'un véhicule automobile (1, 12, 15, 21) dans le sens d'un maintien d'une voie de circulation, au moins un avertissement est supprimé, et/ou, dans le cas d'un système d'assistance au conducteur rapporté à la traversée du véhicule automobile (1, 12, 15, 21) dans le sens d'une assistance lors d'un changement de voie de circulation, un avertissement est produit, et/ou un avertissement est modifié en fonction de la détection d'un caractère critique.

3. Procédé selon l'une quelconque des revendications précédentes,
**caractérisé en ce que**
dans le cas de l'absence d'une activation d'au moins un moyen d'indication d'intention de changer de voie de la part du conducteur du véhicule automobile (1, 12, 15, 21), au moins un avertissement est modifié et/ou supprimé et/ou produit.

4. Procédé selon l'une quelconque des revendications précédentes,
**caractérisé en ce que**
l'au moins une situation de conduite détectée par le système d'assistance au conducteur, rapportée à au moins un véhicule (11, 19) sur une voie de circulation adjacente (9) est une conduite décalée adaptée à un véhicule (11, 19) sur une voie de circulation adjacente (9) et/ou un comportement coopératif dans une zone d'accès, en particulier un accès sur une autoroute, et/ou l'au moins une situation de conduite détectée rapportée à l'état de la voie de circulation propre (14) est une suppression de la voie de circulation propre (14) et/ou un endommagement de la chaussée et/ou un objet sur la voie de circulation propre.

5. Procédé selon l'une quelconque des revendications précédentes,
**caractérisé en ce que**
une situation de conduite rapportée à l'état de la voie de circulation propre (10, 14, 23) et/ou à un véhicule (11, 19) sur une voie de circulation adjacente (9), est détectée en fonction de données d'au moins un dispositif de navigation et/ou d'au moins un procédé de traitement d'image et/ou d'au moins une analyse de véhicules roulant devant.

6. Procédé selon l'une quelconque des revendications précédentes,
**caractérisé en ce que**
le système d'assistance au conducteur détecte l'état de la voie de circulation propre (10, 14, 23) et/ou au moins un véhicule conduisant sur une voie de circulation adjacente (9), en particulier décalé et/ou dans une zone d'accès, à l'aide d'au moins un moyen de capteur, notamment à l'aide d'au moins un moyen de capteur à détection des angles morts.

7. Procédé selon l'une quelconque des revendications précédentes,
**caractérisé en ce que**
une situation de conduite détectée par au moins un système d'assistance au conducteur, notamment par plusieurs systèmes d'assistance au conducteur communiquant les uns avec les autres, est analysée, notamment en termes de vitesses différentielles et/ou d'écarts par rapport à des véhicules étrangers (11, 19), et/ou en termes d'au moins un intervalle de temps et/ou d'au moins une variation d'un intervalle de temps et/ou d'un temps probable jusqu'à une collision et/ou d'une différence entre une vitesse souhaitée et une vitesse réelle et/ou de la présence d'une voie d'évitement et/ou de la position de véhicules étrangers (11, 19).

8. Procédé selon l'une quelconque des revendications précédentes,
**caractérisé en ce que**
la détection de la situation de conduite et/ou une analyse d'une situation de conduite détectée est effectuée en tenant compte de données de trajectoires prédictives et/ou d'indices de changement de voies, notamment en tenant compte d'un écartement transversal et/ou d'un angle du volant de direction et/ou d'une vitesse transversale et/ou d'un indicateur lumineux et/ou d'un signalement de la circulation et/ou d'un affichage d'une intension de changer de voie.

9. Procédé selon l'une quelconque des revendications précédentes,
**caractérisé en ce que**
au moins un avertissement d'un conducteur (2) du véhicule automobile (1, 12, 15, 21) prévu du côté du système d'assistance au conducteur est modifié et/ou supprimé et/ou produit en fonction d'au moins une situation de conduite détectée au moyen du système d'assistance au conducteur et rapportée à au moins un souhait de navigation et/ou une opération de dépassement et induisant une action de traversée.

10. Véhicule automobile (1, 12, 15, 21) comprenant un système d'assistance au conducteur fonctionnant conformément à un procédé selon l'une quelconque des revendications précédentes, rapporté au maintien de la voie de circulation actuelle d'un véhicule automobile (1, 12, 15, 21).
